# EUROPEAN PATENT SPECIFICATION

(11) **EP 3 411 433 B1**
(45) Date of publication and mention of the grant of the patent: **27.09.2023**
(21) Application number: 17701130.1
(22) Date of filing: 24.01.2017
(51) Int. Cl.: C08K 3/30, C08L 23/00, C08K 5/13, C08K 5/526, C08L 23/06

(54) **PIPE PRODUCED WITH A POLYMER COMPOSITION COMPRISING A POLYETHYLENE**
AUS EINER POLYMERZUSAMMENSETZUNG MIT EINEM POLYETHYLEN HERGESTELLTES ROHR
TUYAU RÉALISÉ AVEC UNE COMPOSITION POLYMÈRE COMPRENANT UN POLYÉTHYLÈNE

(30) Priority: 02.02.2016 EP 16153883
(43) Date of publication of application: 12.12.2018
(73) Proprietor: SABIC Global Technologies B.V., 4612 PX Bergen op Zoom (NL)
(72) Inventor: BOERAKKER, Mark , Johannes, 6160 GA Geleen (NL); VOETS, Patrick ,Elisabeth, Luc, 6160 GA Geleen (NL); VAN MIERLOO, Sarah, 6160 GA Geleen (NL); STEENBAKKERS-MENTING, Henrica, Norberta, Alberta, Maria, 6160 GA Geleen (NL)
(74) Representative: Sabic Intellectual Property Group
(86) International application number: PCT/EP2017/051356
(87) International publication number: WO 2017/133918

(56) References cited:
- EP-A1- 2 361 951
- WO-A1-2007/147871
- US-A1- 2013 122 226
- US-A1- 2015 090 671

## Description

The present invention relates to a pipe for the transport of water produced with a polymer composition comprising a polyolefin. The pipe has an improved resistance to chlorinated disinfectants.

Pipes for the transport of gas, for sanitation and for water supply may be produced with for example bimodal polyethylene compositions. Pipes have a very good resistance to water however their lifetime is shortened when the pipes come into contact with disinfectants which are often added to water for hygienic reasons. The chlorine dioxide used as disinfectant in water degrades most materials including polyethylene (Colin, Aging of polyethylene pipes transporting drinking water disinfected by chlorine dioxide, part I, Chemical aspects; Polymer engineering and Science 49(7); 1429-1437; July 2009). Other chlorinated solvents are for example chloramine and chlorine. It is known in the art to apply additives for example antioxidants and stabilizers to prevent said degradation. Several types of additives are proposed to protect polymers during processing and to achieve the desired end-use properties. However, appropriate combinations of stabilizers have to be carefully selected, depending on the desired final properties the polymeric article should have.

US2013/0122226 A1 concerns a method comprising forming a polymeric composition by adding zinc oxide_to a polymer such as HDPE wherein a pipe is formed from the polymeric composition. It does not disclose zinc sulphide.

US2015/0090671 A1 concerns a method for transporting water containing chlorine dioxide comprising the step of conveying the water through a pipe comprising a polyolefin composition, the polyolefin composition comprising an acid scavenger selected from layered double hydroxides (LDHs), metal oxides, metal lactates, and metal steaoryl-2-lactylates. It does not disclose zinc sulphide.

EP2361951 and WO2007/147871 disclose a pipe based on polypropylene.

It is the object of the present invention to provide pipe applications with improved service lifetime for the transportation of water containing chlorinated disinfectants, for example chlorine dioxide, chloramine and chlorine.

The pipe according to the invention is defined in claim 1.

The drinking water pipe, preferably a pressure pipe, based on this polymer composition has an improved protection against for example chlorine dioxide containing cold or hot water and consequently a longer life time. It is also possible to transport waste water or water for cooling.

Polyethylene is selected from multimodal polyethylene for example bimodal or trimodal polyethylene.

Preferably, the polyolefin is bimodal polyethylene.

Suitable polyphenolic compounds include for example tetrakis[methylene-3-(3',5'-di-t-butyl-4-hydroxyphenyl)propionate] methane;1,1,3-tris(2-methyl-4-hydroxy-5-t-butylphenyl) butane; 1,3,5-trimethyl-2,4,6-tris(3,5-di-t-butyl-4-hydroxybenzyl)benzene, bis(3,3-bis(4'-hydroxy-3'-t-butylphenyl)butanoic acid]-glycol ester; tris(3,5-di-t-butyl-4-hydroxy benzyl)isocyanurate; 1,3,5-tris(4-t-butyl-2,6-dimethyl-3-hydroxybenzyl)isocyanurate; 5-di-t-butyl-4-hydroxy-hydrocinnamic acid triester with 1,3,5-tris(2-hydroxyethyl)-s-triazine-2,4,6(1H, 3H, 5H)-trione; p-cresol/ dicyclopentadiene butylated reaction product; 2,6-bis(2'-bis-hydroxy-3'-t-butyl-5'-methyl-phenyl-4-methyl-phenol).

A preferred polyphenolic compound is 1,3,5-trimethyl-2,4,6-tris(3,5-di-t-butyl-4-hydroxybenzyl)benzene (Irganox 1330 supplied by BASF).

Suitable organic phosphites and phosphonites include for example triphenyl phosphite, diphenyl alkyl phosphites, phenyl dialkyl phosphites, tris(nonylphenyl) phosphite, trilauryl phosphite, trioctadecyl phosphite, distearyl pentaerythritol diphosphite, tris(2,4-di-tert-butylphenyl) phosphite, diisodecyl pentaerythritol diphosphite, bis(2,4-di-tert-butylphenyl) pentaerythritol diphosphate, bis(2,6-di-tert-butyl-4-methylphenyl) pentaerythritol diphosphate, bisisodecyloxy-pentaerythritol diphosphite, bis(2,4-di-tert-butyl- 6-methylphenyl) pentaerythritol diphosphite, bis(2,4,6-tri-tert-butylphenyl) pentaerythritol diphosphite, tristearyl sorbitol triphosphite, tetrakis(2,4-di-tert-butylphenyl) 4,4'- biphenylenediphosphonite, 6-isooctyloxy-2,4,8,10-tetra-tert-butyl-12H-dibenzo[d,g]-1,3,2-dioxaphosphocin, 6-fluoro-2,4,8,10-tetra-tert-butyl-12-methyldibenzo[d,g]-1,3,2-dioxaphosphocin, bis(2,4-di-tert-butyl-6-methylphenyl) methyl phosphite, bis(2,4-di-tert-butyl- 6-methylphenyl) ethyl phosphite.

A preferred phosphite is tris(2,4-di-tert-butylphenyl) phosphite (Irgafos 168 supplied by BASF).

According to another preferred embodiment of the invention the pipe is produced with a composition comprising
(a) multimodal polyethylene
(b) zinc sulfide
(c) polyphenolic compound
(d) organic phosphite and/or phosphonite
wherein the weight ratio (b): (c+d) ranges between 7:1 and 1:7.

Preferably (b, (c) and (d) are added during the granulation step of the multimodal, for example bimodal, high density polyethylene powder.

According to a preferred embodiment of the invention the components are added to the polyethylene resin while the polyethylene is in a molten state during extrusion.

The components may be added together and may be added separately.

Preferably the components are added in one step.

The amount of the olefin polymer in the composition is higher than 95.0 wt%.

Preferably the amount of zinc sulphide, in the composition is lower than 2.0 wt%.

More preferably this amount is lower than 1.0 wt%.

Most preferably this amount ranges between 0.05 and 0.9 wt%.

These amounts protect the pipe against chlorine dioxide during a long period.

The multimodal ethylene polymer may be an ethylene homo- or copolymer.

The multimodal ethylene grades to be applied in pipe applications may comprise additives such as for example carbon black, pigments, stearates, a UV stabilizer for example a sterically hindered amine, fillers, minerals, lubricants and/or other stabilisers.

The production processes for bimodal high density polyethylene (HDPE) are summarised at pages 16-20 of "PE 100 Pipe systems" (edited by Bromstrup; second edition, ISBN 3-8027-2728-2).

The production of bimodal high density polyethylene (HDPE) via a low pressure slurry process is described by Alt et al. in "Bimodal polyethylene-Interplay of catalyst and process" (Macromol.Symp. 2001, 163, 135-143). Bimodal high density polyethylene may be produced via a low pressure slurry process for the production of comprising a polymerisation stage, a powder drying stage, an extrusion and pellet handling stage, a recycling stage and a wax removal unit. In a two stage cascade process the reactors may be fed continuously with a mixture of monomers, hydrogen, catalyst/co-catalyst and diluent recycled from the process. In the reactors, polymerisation of ethylene occurs as an exothermic reaction at pressures in the range between for example 0.5 MPa (5 bar) and 1MPa (10 bar) and at temperatures in the range between for example 75 °C and 88 °C. The heat from the polymerisation reaction is removed by means of cooling water. The characteristics of the polyethylene are determined amongst others by the catalyst system and by the concentrations of catalyst, co monomer and hydrogen. The production of bimodal high density polyethylene (HDPE) via a low pressure slurry process may also be performed via a three stage process.

The concept of the two stage cascade process is elucidated at pages 137-138 by Alt et al. "Bimodal polyethylene-Interplay of catalyst and process" (Macromol. Symp. 2001, 163). The reactors are set up in cascade with different conditions in each reactor including low hydrogen content in the second reactor. This allows for the production of HDPE with a bimodal molecular mass distribution and defined co monomer content in the polyethylene chains.

Suitable catalysts for the production of multimodal polyethylene include Ziegler Natta catalysts, chromium based catalysts and single site metallocene catalysts. In all potential possible technologies the process and the catalyst have to form a well-balanced system. The catalyst is crucial for the polymerisation reaction of multimodal polyethylene. By cooperation of process and catalyst a definite polymer structure is produced.

The invention will be elucidated by means of the following non-limiting examples.

### Examples

SABIC Vestolen A5924 (Resin A) used as base polymer in all examples was a bimodal high density polyethylene with MFR₅ of 0.24 g/10min and density 958 kg/m³.

### Examples I and Comparative Examples A-C

The Example I and Comparative Examples A-B use different additive packages in combination with Resin A to protect the polyethylene from attack by chlorine dioxide (see Table 1). The components as indicated in Table 1 were mixed at 245 degrees Celcius using a twin screw extruder.

**Table 1**

| Composition | Resin A wt% | Calcium stearate ppm | Carbon black wt% | Irganox 1010 ppm | Irgafos 168 ppm | Zinc sulfide ppm | Irganox 1330 ppm | DHT4A ppm |
|---|---|---|---|---|---|---|---|---|
| A | 97 | 2000 | 2.5 | 2000 | 1000 | 0 | 0 | 0 |
| B | 96.15 | 2000 | 2.5 | 2000 | 2500 | 0 | 5000 | 2000 |
| I | 96.00 | 2000 | 2.5 | 2000 | 2500 | 2000 | 5000 | 2000 |

wherein:
- Irganox 1010 :Tetrakis [methylen- 3-(3 ',5 ')-di-t-butyl-4 '-hydroxyphenyl) propionate] methane commercially available from Ciba Speciality Chemicals,
- Zinc sulfide: Sachtolith HS obtained from Sachtleben;
- Irganox 1330 : 1,3,5-Trimethyl-2,4,6-tris(3,5-di-tert-butyl-4-hydroxybenzyl)benzene;
- Irgafos 168: Tris(2,4-di-tert-butylphenyl) phosphite ;
- DHT-4A^{®}, commercially available hydrotalcite from Kisuma Chemicals.
- Resin A: SABIC Vestolen A5924; bimodal high density polyethylene with MFR₅ 0.24 g/10min and density 958 kg/m³.

Compounds were compression molded using ISO1872-2 resulting in plaques, which were cut to ISO527-1A tensile bars (4 mm thick).

### Ageing test

The tensile bars were aged in a continuous water flow at a temperature of 40 ºC with a chlorine dioxide concentration maintained at 1 mg/L and a pH maintained at 7.2. Flow rate was regulated at 200 L/h. Water hardness was regulated to 20 ºF. A constant fresh water flow was added during testing allowing full renewal of the testing water each 4 hrs.

The compression molded samples were aged for 1000 hrs.

Tensile tests according to Plastics- Determination of tensile properties ISO527-1 at room temperature at a strain rate of 50 mm/min on aged and non-aged tensile bars were performed to determine the residual elongation at break for the aged samples and reported in Table 2.

**Table 2**

| Composition | Elongation @ break before ageing in % | Elongation @ break after ageing in % |
|---|---|---|
| A | 466 | 33 |
| B | 301 | 259 |
| I | 347 | 321 |

Table 2 shows that Example I demonstrates significantly higher elongation at break after being exposed to water containing chlorine dioxide than Comparative Example A.

Comparing Comparative Example B to Example I shows that the effect of adding zinc sulfide had an additional effect on the elongation at break as obtained after exposure to water containing chlorine dioxide.

## Claims

1. Pipe for the transport of water produced with a polymer composition comprising a polyolefin and zinc sulphide, wherein the polyolefin is multimodal polyethylene and the amount of the olefin polymer in the composition is higher than 95.0 wt%.

2. Pipe according to Claim 1 **characterised in that** the composition comprises a polyphenolic compound and/or an organic phosphite and/or phosphonite.

3. Pipe according to Claim 2 **characterised in that** the polyolefin is bimodal polyethylene.

4. Pipe according to any one of Claims 2-3 **characterised in that** the polyphenolic compound is 1,3,5-trimethyl-2,4,6-tris(3,5-di-t-butyl-4-hydroxybenzyl)benzene

5. Pipe according to any one of Claims 2-4 **characterised in that** the phosphite is tris(2,4-di-tert-butylphenyl) phosphite.

6. Pipe according to any one of Claims 1-5 **characterised in that** the amount of zinc salt in the composition is lower than 2.0 wt%.

7. Pipe according to any one of Claims 1-6 **characterised in that** the composition comprises
(a) multimodal polyethylene
(b) zinc sulfide
(c) polyphenolic compound
(d) organic phosphite and/or phosphonite
wherein the weight ratio (b): (c+d) ranges between 7:1 and 1:7.

## Patentansprüche

1. Rohr für den Transport von Wasser, das mit einer Polymerzusammensetzung hergestellt wird, die ein Polyolefin und Zinksulfid umfasst, wobei das Polyolefin ein multimodales Polyethylen ist und die Menge des Olefinpolymers in der Zusammensetzung mehr als 95,0 Gew.-% beträgt.

2. Rohr nach Anspruch 1, **dadurch gekennzeichnet, dass** die Zusammensetzung eine polyphenolische Verbindung und/oder ein organisches Phosphit und/oder Phosphonit umfasst.

3. Rohr nach Anspruch 2, **dadurch gekennzeichnet, dass** das Polyolefin ein bimodales Polyethylen ist.

4. Rohr nach einem der Ansprüche 2 bis 3, **dadurch gekennzeichnet, dass** die polyphenolische Verbindung 1,3,5-Trimethyl-2,4,6-tris(3,5-di-t-butyl-4-hydroxybenzyl)benzol ist.

5. Rohr nach einem der Ansprüche 2 bis 4, **dadurch gekennzeichnet, dass** das Phosphit Tris(2,4-di-tert-butylphenyl)phosphit ist.

6. Rohr nach einem der Ansprüche 1 bis 5, **dadurch gekennzeichnet, dass** die Menge an Zinksalz in der Zusammensetzung weniger als 2,0 Gew.-% beträgt.

7. Rohr nach einem der Ansprüche 1 bis 6, **dadurch gekennzeichnet, dass** die Zusammensetzung umfasst:
(a) multimodales Polyethylen
(b) Zinksulfid
(c) eine polyphenolische Verbindung
(d) organisches Phosphit und/oder Phosphonit
wobei das Gewichtsverhältnis (b):(c+d) zwischen 7:1 und 1:7 liegt.

## Revendications

1. Tuyau pour le transport d'eau produit avec une composition polymère comprenant une polyoléfine et du sulfure de zinc, dans lequel la polyoléfine est du polyéthylène multimodal et la quantité du polymère oléfine dans la composition est supérieure à 95,0 % en poids.

2. Tuyau selon la revendication 1 **caractérisé en ce que** la composition comprend un composé polyphénol et/ou un phosphite et/ou un phosphonite organique.

3. Tuyau selon la revendication 2 **caractérisé en ce que** la polyoléfine est du polyéthylène bimodal.

4. Tuyau selon l'une quelconque des revendications 2 à 3, **caractérisé en ce que** le composé polyphénol est 1,3,5-triméthyl-2,4,6-tris(3,5-di-t-butyl-4-hydroxybenzyl)benzène.

5. Tuyau selon l'une quelconque des revendications 2 à 4, **caractérisé en ce que** le phosphite est le phosphite de tris(2,4-di-tert-butylphényl).

6. Tuyau selon l'une quelconque des revendications 1 à 5, **caractérisé en ce que** la quantité de sel de zinc dans la composition est inférieure à 2,0 % en poids.

7. Tuyau selon l'une quelconque des revendications 1 à 6, **caractérisé en ce que** la composition comprend
(a) du polyéthylène multimodal
(b) du sulfure de zinc
(c) un composé polyphénolique
(d) un phosphite et/ou un phosphonite organique
dans lequel le rapport pondéral (b) : (c+d) est compris entre 7 : 1 et 1 : 7.
